(19) Europäisches Patentamt
European Patent Office
Office européen des brevets

(11) EP 0 846 132 B1

(12) EUROPEAN PATENT SPECIFICATION

(45) Date of publication and mention of the grant of the patent:
**11.04.2001 Bulletin 2001/15**

(21) Application number: **96926023.1**

(22) Date of filing: **09.08.1996**

(51) Int Cl.[7]: **C08F 210/16**, C08F 4/602

(86) International application number:
**PCT/NL96/00319**

(87) International publication number:
**WO 97/07146 (27.02.1997 Gazette 1997/10)**

(54) **CATALYST SYSTEM FOR THE PREPARATION OF A RUBBERY COPOLYMER**

KATALYSATORSYSTEM FÜR DIE HERSTELLUNG VON KAUTSCHUKARTIGEM COPOLYMER

SYSTEME CATALYTIQUE POUR LA PREPARATION D'UN COPOLYMERE CAOUTCHOUTEUX

(84) Designated Contracting States:
**DE FR IT NL**

(30) Priority: **21.08.1995 NL 1001014**

(43) Date of publication of application:
**10.06.1998 Bulletin 1998/24**

(73) Proprietor: **DSM N.V.**
**6411 TE Heerlen (NL)**

(72) Inventors:
- **RENKEMA, Jacob**
  **NL-6121 NB Born (NL)**
- **WINDMULLER, Peter, Jozef, Hubert**
  **NL-6374 JC Landgraaf (NL)**

(56) References cited:
**EP-A- 0 439 964**
**EP-A- 0 633 272**
**EP-A- 0 653 443**
**WO-A-96/15161**
**FR-A- 1 294 416**
**FR-A- 1 327 965**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to a catalyst system suited for the preparation of a rubbery copolymer of ethylene, one or more α-olefins and optionally one or more polyunsaturated compounds, comprising a vanadium compound, an organometal compound and optionally a promoter.

A similar catalyst system is disclosed in EP-A-44,119. Such a catalyst system enables amorphous ethylene/α-olefin copolymers (also known as EAM rubbers) as well as amorphous ethylene/α-olefin/diene terpolymers (also known as EADM rubbers) to be obtained. Propylene is often used as α-olefin in the preparation of EPM or EPDM rubbers. However, the rubbers that are obtained in this manner have a narrow molecular weight distribution (MWD) and a narrow composition distribution. The latter means that the molecule chains almost all have the same structure. A narrow MWD here and hereafter means a MWD of less than 5. It is not well possible to produce rubbers having a wide or a very wide MWD with the aid of such a catalyst. Both a narrow MWD and a narrow composition distribution are in themselves important if in a later vulcanization reaction a high degree of vulcanization of the rubbers is to be achieved. A high degree of vulcanization in its turn is important for good properties of the vulcanized end product. However, rubbers having a narrow MWD and a narrow composition distribution also have a number of drawbacks. Their flow behaviour is poor so that the rubbers cannot be extruded or can be extruded only with great difficulty. Another drawback is poor miscibility of these rubbers in further processing; refer to Noordermeer and Wilms, Kautschuk, Gummi & Kunststoffe, vol. 41(6), 1988, pp 558-563.

EP 633 272 A describes a supported catalyst for the polymerisation of olefins, giving polymer particles with controlled morphology and high bulk density. Use is made of a transitionmetal, which is preferably zirconium.

The object of the invention is to provide a catalyst system enabling rubbers having a controllable wide or very wide MWD to be produced.

This object is achieved by the organometal compound in the catalyst system being an imido complex that satisfies the general formula

$$(R_u\text{-}X^1{}_v\text{-}Me^1)_n = NR^1 \qquad \text{(I)}$$

where each individual $Me^1$ is a metal chosen from group 1, 2, 12 or 13 of the Periodic System of Elements, each individual R is hydrogen or a hydrocarbon group having 1-20 C atoms, $NR^1$ is an imido group where $R^1$ is hydrogen or a hydrocarbon group having 1-20 C atoms or a group with the general formula $MR^3{}_3$, where M is an element chosen from group 14 of the Periodic System of Elements, each individual $R^3$ is hydrogen, a hydrocarbon group having 1-20 C atoms or a heteroatom-containing group, $X^1$ is a halogen atom and $n \geq 1$; $u > 0$, $v \geq 0$; $u + v + 2/n = p$, where p = valency of $Me^1$.

Accordingly, one or two metal ligands may be bonded to the imido complex according to formula (I) ; if n = 1, the imido complex is represented by the formula:

$$R_u\text{-}X^1{}_v\text{-}Me^1 = NR^1 \qquad \text{(II)}$$

and it holds that $u + v = p-2$;
if n = 2, the imido complex is represented by the formula:

$$(R_u\text{-}X^1{}_v\text{-}Me^1)\text{-}\overset{R^1}{\underset{}{N}}\text{-}(Me^1\text{-}X^1{}_v\text{-}R_u) \qquad \text{(III)}$$

and it holds that: $u + v = p-1$. The ($R_u$-$X^1{}_v$-$Me^1$)groups in this complex III may be the same or different.

The organometal compound (also known as cocatalyst) may be present in monomeric or in oligomeric form.

Due to the presence of the organometal compound (I) in the catalyst system it is possible to obtain rubbers having a wide or very wide MWD. As a result, the rubbers exhibit excellent extrusion and mixing behaviour. Here and hereafter reference is invariably made to a molecular weight distribution, because the molecular weight distribution can be determined more easily and clearly than the composition distribution. In effect, the distribution in general, i.e. both the composition distribution and the molecular weight distribution, may be said to become wider.

By hydrocarbon group in the respective groups in formula (I) is meant an alkyl, aryl, acyl, cycloalkyl, cycloaryl or cycloacyl group. Use may also be made of hydrocarbon groups having one or more functional groups, like e.g.

halogen atoms, -OH, -OR, -COOH, -COOR or $-NH_2$ groups.

$Me^1$ preferably is aluminium. Preferably v is ≥ 1; in that case $X^1$ preferably is chlorine.

In the $M^3{}_3$ group, M preferably is Si. Each individual $R^3$ may be a hydrocarbon group having 1-20 C atoms or a heteroatom-containing group with the heteroatom being chosen from group 15, 16 or 17 of the Periodic System of Elements, more particularly from the group of N, O, P and S or halogen. Each separate $R^3$ may for example also be an alkoxy, aryloxy, amine or amide group, an S compound such as sulphide, sulphite, sulphate, thiol, sulphinate, a P compound such as phosphine, phosphite or phosphate.

If aluminium is chosen for $Me^1$, compound (I) (an aluminium imido complex) can be prepared starting from for example an organoaluminium compound and a primary amine. A process for preparing such an aluminium imido complex is described in M. Cohen, J.K. Gilbert, J.D. Smith, J. Chem. Soc., 1965, 1092 and in J.K. Gilbert, J.D. Smith, J. Chem. Com. (A), 1968, 233.

The temperature at which such preparation takes place usually is in the range from 115 to 250°C. A temperature suitable for the formation of the imido complex can readily be determined by one skilled in the art through simple experiment.

The aluminium imido complexes, if still devoid of halide, may be reacted with an organo- aluminium halide to form halogen-containing aluminium imido complexes.

The following reactions may be mentioned here for illustration: starting from complex (II):

$$Et_3Al + H_2NR \rightarrow [EtAl = NR]$$

$$[EtAl = NR] + EtAlCl_2 \rightarrow [Et_2Al_2Cl_2 = NR]$$

and starting from complex (III):

$$2\ Et_3Al + H_2NR \rightarrow [(Et_2Al)_2 = NR]$$

$$[Et_2Al)_2 = NR] + EtAlCl_2 \rightarrow [Et_5Al_3Cl_2 = NR]$$

In the above reaction equations, "Et" represents an ethyl group; it will be clear that (mixtures of) other alkyl groups and (mixtures of) other organoaluminium halides are suitable also; other organometal (halide) compounds are also applicable here.

An extra organometal having the following general formula

$$R^4{}_x\text{-}Me^2\text{-}X^2{}_{p\text{-}x} \qquad \text{(IV)}$$

may be present in the catalyst system, where $Me^2$ is chosen from group 1, 2, 12 or 13 of the Periodic System of Elements, each $R^4$ may be the same or different and represents hydrogen or a hydrocarbon group having 1-20 C atoms, $X^2$ is a halogen atom, $x \leq p$, and p=valency of $Me^2$.

This affords an extra possibility of controlling the MWD. Consequently, the rubbers to be prepared therewith can in effect be tailor-made.

Preferably, aluminium is also chosen for $Me^2$. $X^2$ preferably is chlorine. In particular, in (IV) $x \geq 1$. The most suitable compounds for compound (IV) are ethylaluminiumdichloride (MEAC), sesquiethylaluminiumchloride (SEAC) or diethylaluminiumchloride (DEAC).

The MWD can be infinitely varied between narrow and very wide by varying the amounts and the ratios of compounds (I) and (IV). The MWD has been found to increase with increasing amounts, in relative terms, of compound (I) (relative to (I) + (IV)) in the catalyst system.

The catalyst system also comprises a vanadium compound, that is soluble in the polymerisation medium. Examples of suitable compounds are halides, oxyhalides, the alkoxides and the acetylacetonates such as vanadiumtetrachloride, vanadiumoxytrichloride and vanadiumacetylacetonate. Imidoaryl complexes of vanadium may also be applied. Such complexes are described in EP-A-532,098.

The presence of a promoter can increase the activity of the catalyst system. The promoter's presence also has an effect on the MWD. The more promoter is present, the narrower the MWD becomes. Preferably, the molar ratio of promoter : vanadium is <4. More particularly, the molar ratio of promoter : vanadium is <2. Suitable promoters are

halogenized compounds such as trichloroacetic acid or esters thereof, hexachloroacetone, hexachloropropylene, α-trichlorotoluene or perchlorocrotonic acid compounds. These compounds, however, have a high chlorine content. To prevent too high a halogen content from occurring in the rubbery copolymer to be prepared, use may be made of the specific low-halogen compounds suggested to be used as promoter in EP-A-44,119. Preferably, these compounds have at most 2 halogen atoms per molecule. Examples of such compounds include the alkyl or alkoxyalkylesters of phenyl, mono or dihalogen acetic acid.

The invention also relates to a process in which a catalyst system of the invention is employed in the preparation of a rubbery copolymer of ethylene, one or more α-olefins and optionally one or more polyunsaturated compounds in e.g. liquid-phase polymerization. Rubbery copolymer here and hereafter means a copolymer which at room temperature and higher temperatures exhibits at most 10% crystallinity measured by means of DSC (differential scanning calorimetry).

Suitable α-olefins which, besides ethylene, may be used as monomer are propylene, butene-1, pentene-1, hexene-1, octene-1 or the branched isomers thereof, such as 4-methyl-1-pentene as well as styrene, α-methylstyrene. Mixtures of these alkenes are also suitable; it is preferred for propylene and/or butene-1 to be used.

The polyunsaturated compound serves to provide polyunsaturation in the copolymer; it contains at least two C=C bonds and may be either aliphatic or alicyclic. Aliphatic polyunsaturated compounds generally contain from 3 to 20 carbon atoms with the double bonds being either conjugated or, preferably, unconjugated. Examples hereof are: 1,3-butadiene, isoprene, 2,3-dimethyl-1,3-butadiene, 2-ethyl-1,3-butadiene, piperylene, mycrene, allene, 1,2-butadiene, 1,4,9-decatriene, 1,4-hexadiene, 1,5-hexadiene and 4-methyl-1,4-hexadiene.

Alicyclic polyunsaturated compounds, which may or may not contain a bridge group, may be mono or polycyclic. Examples of such compounds are norbornadiene and its alkyl derivatives; the alkylidenenorbornenes, in particular the 5-alkylidene-2-norbornenes in which the alkylidene group contains from 1 to 20, preferably from 1 to 8 carbon atoms; the alkenylnorbornenes, in particular the 5-alkenyl-2-norbornenes in which the alkenyl group contains from 2 to 20, preferably from 2 to 10 carbon atoms, for example vinylnorbornene, 5-(2'-methyl-2'butenyl)-2-norbornene and 5-(3'-methyl-2'butenyl)-2-norbornene; dicyclopentadiene and the polyunsaturated compounds of bicyclo-(2,2,1)-heptane, bicyclo-(2,2,2)-octane, bicyclo-(3,2,1)-octane and bicyclo-(3,2,2)-nonane, with at least one of the rings being unsaturated. Furthermore, use may be made of compounds such as 4,7,8,9-tetrahydroindene and isopropylidene tetrahydroindene. Especially suitable are dicyclopentadiene, vinylnorbornene, 5-methylene-2-norbornene or 5-ethylidene-2-norbornene or hexadiene-1,4. Mixtures of the aforementioned compounds may also be used.

The polyunsaturated compound may be present in the copolymer in amounts of up to 30 wt.%, preferably up to 15 wt.%.

If desired, besides or in place of the diene, an unsaturated compound having one or more functional groups such as halogen atoms, -OH, -OR, -COOH, -COOR or $-NH_2$ groups may be incorporated into the copolymer in an amount of up to 20 wt.%.

The molar ratio of the monomers applied is dependent on the desired composition of the polymer. It is not possible to quote any generally applicable ranges for the molar ratios since the polymerization rates of the monomers are far apart. For copolymerization of ethylene and propylene a molar ratio will generally be chosen between 1 : 1 and 1 : 50. If a polyunsaturated compound is to be copolymerized, its molar ratio relative to ethylene will usually be from 0.0001 : 1 to 1 : 1.

The polymerization reaction normally is conducted at a temperature of between -40 and 200°C, preferably between 10 and 80°C. The pressure normally is 0.1-5 MPa, but higher or lower pressures are also possible. Preferably, the process is carried out continuously, but it may also be carried out semi-continuously or batch-wise.

The residence time in the process may vary from some seconds to some hours. In general, the residence time will be chosen between some minutes and one hour. The MWD can also be controlled by varying the residence time in the reactor. The longer the residence time, the wider the MWD.

The polymerization may take place in a liquid that is inert to the catalyst system, e.g. one or more saturated aliphatic hydrocarbons such as butane, pentane, hexane, heptane, pentamethylheptane or petroleum fractions; aromatic hydrocarbons, e.g. benzene or toluene, or halogenated aliphatic or aromatic hydrocarbons, e.g. tetrachloroethylene. Operation may take place at such temperature and pressure that one or more of the applied monomers, particularly the α-olefin, e.g. propylene, are liquid and present in such large amounts that they act as distribution agent. In that case, no other distribution agent is needed. The process of the invention can be carried out in either a reactor filled with a gas and a liquid or in a reactor filled with a liquid. The use of a wholly or partially heterogenized catalyst system allows the polymerization process to be carried out in suspension or in the gas phase.

In addition to the possibilities already mentioned, the molecular weight can be adjusted by means of techniques known to one skilled in the art. in particular, this can be effected using chain length controllers such as diethylzinc and, preferably, hydrogen. Minute amounts of hydrogen have a sufficient effect on the molecular weight.

Surprisingly, it has been found that the catalyst system described above is particularly suited for application in liquid-phase processes at room temperature or even higher temperatures so that, in contrast with the conventional

liquid-phase processes, the heat of reaction can be carried off in a more efficient manner. As is known, this can be effected by strongly cooling the feed to the reactors as well as by evaporating a portion of the reaction medium.

Following the polymerization, the polymer can be worked up in various ways. For liquid-phase processes this may be by evaporating the solvent or by steam-coagulation.

In general, the copolymers that are obtainable with the process of the invention contain between 25 and 85 wt.% ethylene. However, products having an ethylene content of between 40 and 75 wt.% are preferred.

The overriding advantage of the use of a catalyst system of the invention is that rubbers having a very wide MWD, of more than 5 and even >20 can be obtained (in a single reactor). In addition, it has been found that the MWD can be infinitely varied if compound (IV) and/or the promoter is/are also present. Any MWD can be obtained in this way.

Such copolymers are suited for sundry applications, e.g. for the manufacture of hoses, cables, conveyor belts, sealing sections. They may optionally be vulcanized using customary techniques with the aid of materials that supply free radicals such as peroxides or with the aid of sulphur. These copolymers lend themselves very well to processing. Customary techniques of rendering a rubber processable can also be applied to these copolymers. For example, the copolymer can be extended with oil; this is preferably done after the polymerization. Agents may also be added for making friable bales. This can be accomplished by, for example, adding talcum or by using a system such as the one described in EP-A-427,339. The composition set forth therein, comprising an inorganic partitioning agent, a thickener and binder reagent and an anionic dispersant, has been found to be very well suitable for use in the products of the invention.

The invention will now be described with reference to the following examples and comparative experiments, without being limited thereto.

The compositions of the copolymers were determined by means of Fourier transformation infrared spectroscopy (FT-IR) using the technique commonly used in the rubber industry. The FT-IR measurement gives the copolymer's composition expressed in percentages by weight of monomer units. In the examples, the copolymer's composition, determined by FT-IR, is expressed in percentages by weight of propylene units (% $C_3$).

The molecular weight was determined by size exclusion chromatography-differential viscosimetry (SEC-DV). SEC-DV was used for determining the number-average molecular weight ($M_n$), the weight-average molecular weight ($M_w$), the z-average molecular weight ($M_z$) and the molecular weight distribution (MWD = $M_w/M_n$).

The crystallization behaviour of the copolymers obtained was determined by differential scanning calorimetry (DSC). On rapid heating to 200°C and holding at that temperature for 5 minutes, the specimen is cooled to -70°C at the rate of 10°C/minute. The concomitant thermal effects, such as the crystallization point ($T_c$, in °C) and the crystallization enthalpy ($\triangle H$, in kJ/kg) of the copolymer, are recorded.

The polymer yield in the examples is expressed in g of copolymer per mmole of vanadium.

<u>Examples</u>

<u>Example I</u>

**Preparation of various metal-imido complexes**

<u>General method of preparation</u>

An $\chi$ equivalent of a primary amine was added at room temperature to a solution of triethylaluminium (TEA) in pentamethylheptane. The reaction mixture was heated to 170°C for 3 hours, in which process 2$\chi$ equivalents of gaseous ethane were released. The reaction mixture was cooled to room temperature and diluted with heptane. The arganoaluminium-imido complex was mixed with ethylaluminiumdichloride ($\chi$ equivalent relative to TEA) so as to obtain an imido cocatalyst.

Table 1

| amine | $\chi$ equivalent amine | imido cocatalyst |
|---|---|---|
| aniline | 0.5 | 1 |
| | 1 | 2 |
| methoxyethylamine | 0.5 | 3 |
| | 1 | 4 |

Table 1 (continued)

| amine | χ equivalent amine | imido cocatalyst |
|---|---|---|
| furfurylamine | 0.5 | 5 |
| | 1 | 6 |

Example II

**Batch-polymerization processes**

A 1.5-litre autoclave was filled with 300 ml of heptane and metal-imido complex (0.5 mmole). A pressure of 0.7 MPa was established in the reactor by means of purified monomers and the reactor was so conditioned that the ratio of propylene : ethylene in the gas hood was 2 : 1. The reactor temperature was approx. 30°C. Once the reactor had been conditioned, the vanadium compound (0.05 mmole) and optional promoter (0.05 mmole) were pumped into the reactor. During the polymerization, the monomer concentrations were kept as constant as possible by adding propylene (200 Nl/hour) and ethylene (100 Nl/hour) to the reactor. Approx. 2 Nl/hour of hydrogen was added in all examples.
After a polymerization time of 15 minutes the reactor was relieved of pressure and the solution was collected and dried. A rubbery copolymer of ethylene and propylene was obtained.

**Use of various organometal-imido complexes**

Various alkylaluminium-imido chlorides (as obtained in Example I) were employed as cocatalysts in batch-polymerizations. The cocatalysts differed with respect to the overall composition or the composition of the imido group. Vanadyltrichloride ($VOCl_3$) was used as vanadium compound. The results are given in Table 2 below.

Table 2

| Example/ Comp. exp. | cocatalyst No. | yield | % C3 | $M_n$ | $M_w$ | $M_z$ | MWD | $T_c$ | ΔH |
|---|---|---|---|---|---|---|---|---|---|
| | | g/mmole | wt. % | kg/mole | kg/mole | kg/mole | | °C | kJ/kg |
| A | SEAC | 180 | 42 | 230 | 430 | 710 | 1.9 | -8 | 0.3 |
| II.1 | 1 | 310 | 43 | 12 | 480 | 2200 | 40 | 4 | 10 |
| II.2 | 2 | 160 | 39 | 10 | 1670 | 7000 | 167 | -6 | 27 |
| II.3 | 3 | 304 | 41 | 25 | 500 | 2400 | 20 | 7 | 13 |
| II.4 | 4 | 102 | 32 | 16 | 840 | 3700 | 51 | 25 | 44 |
| II.5 | 5 | 348 | 42 | 22 | 550 | 3800 | 25 | 4 | 14 |
| II.6 | 6 | 356 | 43 | 15 | 540 | 3300 | 36 | -4 | 9 |

This set of examples clearly shows that the molecular weight distribution can be widened by means of various

imido cocatalysts.

The activity of the overall catalyst system can be optimized by suitable selection of the cocatalyst composition.

Example III

**Use of various transition metal compounds**

Batch-wise polymerizations were carried analogously to Example II.

In these examples the effect was studied of using different V compounds in the catalyst system.

Cocatalyst 5 was used as cocatalyst.
The results are given in Table 3.
The following V compounds were used:
1 = vanadyltrichloride [$VOCl_3$]
2 = vanadyldichloroisopropylate [$VOCl_2(O^iPr)$]
3 = o,o-dimethylphenylimidovanadiumtrichloride [$DMFIVCl_3$]
4 = vanadiumtetrachloride [$VCl_4$]

Table 3

| Example | V-Compound | Yield | % C3 | $M_n$ | $M_w$ | $M_z$ | MWD | $T_c$ | ΔH |
|---|---|---|---|---|---|---|---|---|---|
| | | g/mmole | wt. % | kg/mole | kg/mole | kg/mole | | °C | kJ/kg |
| III.1 | 1 | 348 | 42 | 22 | 550 | 3800 | 25 | 4 | 14 |
| III.2 | 2 | 360 | 43 | 15 | 330 | 1250 | 22 | 8 | 12 |
| III.3 | 3* | 98 | 36 | 31 | 170 | 410 | 5.5 | 20 | 20 |
| III.4 | 4 | 284 | 53 | 43 | 240 | 1250 | 5.5 | 11 | 4 |

3*: The vanadium compound and the cocatalyst were premixed.

These examples show that the vanadium compound can be freely chosen: all compounds tested give active

to highly active catalyst systems, yielding copolymers having a wide molecular weight distribution.

Example IV

**Use of promoter as catalyst component**

Tests were conducted analogously to Example III.
In Example IV.2, 1 mmole of cocatalyst 5 was added and 0.05 mmole of dichlorophenylacetic ethyl ester (DCPAE) was premixed with vanadium compound 2. The results are given in Table 4. This shows that use of a promoter in the catalyst system of the invention results in a narrowing of the MWD.

Table 4

| Example | V-Compound | Yield | % C3 | $M_n$ | $M_w$ | $M_z$ | MWD | $T_c$ | ΔH |
|---|---|---|---|---|---|---|---|---|---|
| | | g/mmole | wt. % | kg/mole | kg/mole | kg/mole | | °C | kJ/kg |
| IV.1 | 2 | 360 | 43 | 15 | 330 | 1250 | 22 | 8 | 12 |
| IV.2 | 2 + DCPAE | 262 | 31 | 15 | 195 | 770 | 13 | 9 | 35 |

## Claims

1. Catalyst system suited for the preparation of a rubbery copolymer of ethylene, one or more α-olefins and optionally one or more polyunsaturated compounds, comprising a vanadium compound, an organometal compound and optionally a promoter, characterized in that the vanadium compound is soluble in the polymerization medium, and the organometal complex in the catalyst system is an imido complex that satisfies the general formula

$$(R_u\text{-}X^1{}_v\text{-}Me^1)_n = NR^1 \qquad (I)$$

where each individual $Me^1$ is a metal chosen from group 1, 2, 12 or 13 of the Periodic System of Elements, each individual R is hydrogen or a hydrocarbon group having 1-20 C atoms, N-$R^1$ is an imido group where $R^1$ is hydrogen or a hydrocarbon group having 1-20 C atoms or a group with the general formula $MR^3{}_3$, where M is an element chosen from group 14 of the Periodic System of Elements, each individual $R^3$ is hydrogen, a hydrocarbon group having 1-20 C atoms or a heteroatom-containing group, $X^1$ is a halogen atom and $n \geq 1$; $u > 0$, $v \geq 0$; $u + v + 2/n = p$, where p = valency of $Me^1$.

2. Catalyst system according to claim 1, characterized in that $Me^1$ is aluminium.

3. Catalyst system according to claim 1 or 2, characterized in that $X^1$ is chlorine.

4. Catalyst system according to any one of claims 1-3, characterized in that an organometal having the following general formula

$$R^4{}_x\text{-}Me^2\text{-}X^2{}_{p-x} \qquad (II)$$

is also present, where $Me^2$ is chosen from group 1, 2, 12 or 13 of the Periodic System of Elements, each $R^4$ may be the same or different and represents hydrogen or a hydrocarbon group having 1-20 C atoms, $X^2$ is a halogen atom, $x \leq p$, and p=valency of $Me^2$.

5. Catalyst system according to claim 4, characterized in that $Me^2$ is aluminium.

6. Catalyst system according to claim 4 or 5, characterized in that $X^2$ is chlorine.

7. Catalyst system according to any one of claims 4-6, characterized in that $x \geq 1$.

8. Catalyst system according to any one of claims 1-7, characterized in that, in the presence of a promoter, the molar ratio of promoter : vanadium is <4.

9. Catalyst system according to claim 8, characterized in that the molar ratio of promoter : vanadium is <2.

10. Process for the preparation of a rubbery copolymer of ethylene, one or more α-olefins and optionally one or more polyunsaturated compounds, characterized in that a catalyst system according to any one of claims 1-9 is employed in the preparation.

## Patentansprüche

1. Katalysatorsystem, welches zur Herstellung eines kautschukartigen Copolymers von Ethylen, einem oder mehreren α-Olefinen und gegebenenfalls einer oder mehreren polyungesättigten Verbindungen geeignet ist und eine Vanadiumverbindung, eine Organometallverbindung und gegebenenfalls einen Promotor umfaßt, dadurch gekennzeichnet, daß die Vanadiumverbindung im Polymerisationsmedium löslich ist und der Organometallkomplex im Katalysatorsystem ein Imidokomplex ist, welcher der allgemeinen Formel

$$(R_u\text{-}X^1{}_v\text{-}Me^1)_n = NR^1 \qquad (I)$$

genügt, wobei jedes einzelne $Me^1$ ein Metall ist, welches aus der Gruppe 1, 2, 12 oder 13 des Periodensystems der Elemente ausgewählt ist, jedes einzelne R ein Wasserstoff oder ein Kohlenwasserstoffgruppe mit 1 bis 20 C-Atomen ist, $N$-$R^1$ eine Imidogruppe ist, wobei $R^1$ Wasserstoff oder eine Kohlenwasserstoffgruppe mit 1 bis 20 C-Atomen oder eine Gruppe mit der allgemeinen Formel $MR^3_3$ ist, wobei M ein Element ist, welches aus der Gruppe 14 des Periodensystems der Elemente ausgewählt ist, jedes einzelne $R^3$ Wasserstoff, eine Kohlenwasserstoffgruppe mit 1 bis 20 C-Atomen oder eine Heteroatom-enthaltende Gruppe ist, $X^1$ ein Halogenatom ist und $n \geq 1$ ist, $u > 0$ ist, $v \geq 0$ ist, $u + v + 2/n = p$ ist, wobei p = Wertigkeit von $Me^1$ ist.

**2.** Katalysatorsystem nach Anspruch 1, dadurch gekennzeichnet, daß $Me^1$ Aluminium ist.

**3.** Katalysatorsystem nach Anspruch 1 oder 2, dadurch gekennzeichnet, daß $X^1$ Chlor ist.

**4.** Katalysatorsystem nach irgendeinem der Ansprüche 1 bis 3, dadurch gekennzeichnet, daß auch ein Organometall mit der folgenden allgemeinen Formel

$$R^4_x\text{-}Me^2\text{-}X^2_{p-x} \qquad \text{(II)}$$

vorliegt, wobei $Me^2$ aus der Gruppe 1, 2, 12 oder 13 des Periodensystems der Elemente ausgewählt ist, jedes $R^4$ gleich oder verschieden sein kann und Wasserstoff oder eine Kohlenwasserstoffgruppe mit 1 bis 20 C Atomen bedeuten kann, $X^2$ ein Halogenatom ist, $x \leq p$ ist, und p = Wertigkeit von $Me^2$ ist.

**5.** Katalysatorsystem nach Anspruch 4, dadurch gekennzeichnet, daß $Me^2$ Aluminium ist.

**6.** Katalysatorsystem nach Anspruch 4 oder 5, dadurch gekennzeichnet, daß $X^2$ Chlor ist.

**7.** Katalysatorsystem nach irgendeinem der Ansprüche 4 bis 6, dadurch gekennzeichnet, daß $x \geq 1$ ist.

**8.** Katalysatorsystem nach irgendeinem der Ansprüche 1 bis 7, dadurch gekennzeichnet, daß in Gegenwart eines Promotors das Molverhältnis von Promotor: Vanadium < 4 ist.

**9.** Katalysatorsystem nach Anspruch 8, dadurch gekennzeichnet, daß das Molverhältnis Promotor: Vanadium < 2 ist.

**10.** Verfahren zur Herstellung eines kautschukartigen Copolymers von Ethylen, einem oder mehreren α-Olefinen und gegebenenfalls einer oder mehreren polyungesättigten Verbindungen, dadurch gekennzeichnet, daß ein Katalysatorsystem gemäß irgendeinem der Ansprüche 1 bis 9 bei der Herstellung angewandt wird.

## Revendications

**1.** Système catalytique approprié pour la préparation d'un copolymère caoutchouteux d'éthylène, d'une ou de plusieurs α-oléfines et éventuellement d'un ou de plusieurs composés polyinsaturés, comprenant un composé du vanadium, un composé organométallique et éventuellement un activateur, caractérisé en ce que le composé du vanadium est soluble dans le milieu de polymérisation, et en ce que le complexe organométallique dans le système catalytique est un complexe imido qui satisfait la formule générale :

$$(R_u\text{-}X^1_v\text{-}Me^1)_n = NR^1 \qquad \text{(I)}$$

où chaque $Me^1$ individuel est un métal choisi dans le Groupe 1, 2, 12 ou 13 du Système Périodique des Éléments, chaque R individuel est un atome d'hydrogène ou un groupe hydrocarboné ayant 1 à 20 atomes de carbone, $NR^1$ est un groupe imido où $R^1$ est un atome d'hydrogène ou un groupe hydro-carboné ayant 1 à 20 atomes de carbone ou un groupe ayant la formule générale $MR^3_3$, où M est un élément choisi dans le Groupe 14 du Système Périodique des Éléments, chaque $R^3$ individuel est un atome d'hydrogène, un groupe hydrocarboné ayant 1 à 20 atomes de carbone ou un groupe contenant un hétéroatome, $X^1$ est un atome d'halogène et $n \geq 1$ ; $u > 0$, $v \geq 0$, $u+v+2/n = p$, où p = valence de $Me^1$.

2. Système catalytique selon la revendication 1, caractérisé en ce que $Me^1$ est l'aluminium.

3. Système catalytique selon la revendication 1 ou 2, caractérisé en ce que $X^1$ est le chlore.

4. Système catalytique selon l'une quelconque des revendications 1 à 3, caractérisé en ce qu'un organométal ayant la formule générale suivante :

$$R^4{}_x\text{-}Me^2\text{-}X^2{}_{p-x} \qquad (IV)$$

est également présent, où $Me^2$ est choisi dans le Groupe 1, 2, 12 ou 13 du Système Périodique des Éléments, chaque $R^4$ peut être identique ou différent et représente un atome d'hydrogène ou un groupe hydrocarboné ayant 1 à 20 atomes de carbone, $X^2$ est un atome d'halogène, $x \leq p$, et p = valence de $Me^2$.

5. Système catalytique selon la revendication 4, caractérisé en ce que $Me^2$ est l'aluminium.

6. Système catalytique selon la revendication 4 ou 5, caractérisé en ce que $X^2$ est le chlore.

7. Système catalytique selon l'une quelconque des revendications 4 à 6, carac-térisé en ce que $x \geq 1$.

8. Système catalytique selon l'une quelconque des revendications 1 à 7, caractérisé en ce que, en présence d'un activateur, le rapport molaire activateur: vanadium est <4.

9. Système catalytique selon la revendication 8, caractérisé en ce que le rapport molaire activateur:vanadium est <2.

10. Procédé pour la préparation d'un copolymère caoutchouteux d'éthylène, d'une ou de plusieurs $\alpha$-oléfines et éventuellement d'un ou de plusieurs composés polyinsaturés, caractérisé en ce qu'un système catalytique selon l'une quelconque des revendications 1 à 9 est employé dans la préparation.